# EUROPEAN PATENT SPECIFICATION

(11) **EP 3 220 749 B1**
(45) Date of publication and mention of the grant of the patent: **26.12.2018**
(21) Application number: 15804977.5
(22) Date of filing: 12.11.2015
(51) Int. Cl.: A23G 9/08, A23G 9/12

(54) **ICE-CREAM MACHINE**
MASCHINE ZUR HERSTELLUNG VON SPEISEEIS
MACHINE À CRÈME GLACÉE

(30) Priority: 20.11.2014 IT PN20140062
(43) Date of publication of application: 27.09.2017
(73) Proprietor: Sossai, Aldo, 31010 Mareno di Piave (TV) (IT)
(72) Inventor: Sossai, Aldo, 31010 Mareno di Piave (TV) (IT)
(74) Representative: Giugni, Diego
(86) International application number: PCT/IB2015/058739
(87) International publication number: WO 2016/079641

(56) References cited:
- FR-A3- 2 472 347
- US-A- 5 363 746
- US-A1- 2013 340 456
- US-B1- 6 332 333
- US-B2- 7 878 021
- Nemox International: "GELATO CHEF 2200.avi", YouTube , 14 February 2013 (2013-02-14), XP054975769, Retrieved from the Internet: URL:https://www.youtube.com/watch?v=NZ2lI7 hbjPM [retrieved on 2015-03-04]
- Nemoxspa: "Gelatiera a compressore", YouTube , 25 March 2008 (2008-03-25), XP054975770, Retrieved from the Internet: URL:https://www.youtube.com/watch?v=ltEaRO jrB84 [retrieved on 2015-03-04]

## Description

### TECHNICAL FIELD OF THE INVENTION

The present invention is defined by the claims and relates to an ice-cream machine and, in particular, to a machine for making one or more single servings of ice cream instantly from an alimentary compound. Preferably, such a machine is suitable for home uses, although with simple adaptations it can also be used advantageously in public places, such as bars, ice-cream parlors, buffets, cinemas and similar gathering and entertainment places.

### PRIOR ART

Ice-cream machines of domestic type have been known for some time and are generally differentiated into crank-type machines, accumulation machines and self-chilling machines with a refrigerating cycle.

Machines with a refrigerating cycle generally consist of a casing suitable to enclose a refrigerating chamber for forming the ice cream, a refrigerating circuit suitable to cool said refrigerating chamber, a container for transforming the alimentary compound into ice cream adapted to be housed in said chamber, and a device for mixing the alimentary compound, which after being placed in said container is cooled and mixed to obtain ice cream.

This type of machine makes it possible to produce a variable quantity of ice cream with a single flavor in a time that is generally from about 20 minutes to about 1 hour, which depends on the quantity and on the ingredients of the alimentary compound base that is to be turned into ice cream. Normally, the ice cream is prepared in quantities from 400 g to 1000 g and is made, as already mentioned, in a single flavor at a time.

Further, the container for the alimentary compound, or for the ingredients that are added into the container during the process to be mixed and cooled, is removed from the refrigerating chamber once the ice cream is obtained in order to put the ice cream into serving cups. Or else, using an appropriate scoop, the ice cream is taken directly from the container when it is still in said chamber. When all the ice cream is finished, the container and the mixing device must be washed by hand or in a dishwasher to prepare for a new production cycle with an identical or a different flavor. Machines of this type are commercially available. An example of such a machine is the "Gelato Chef 2200", manufactured by Nemox International (see www.youtube.com/watch?v=NZ2ll7hbjPM).

The above-mentioned machines, although they are normally used for making home ice cream, have however some drawbacks.

In particular, the prior-art machines have problems in obtaining a satisfactory creaminess. In other words, the ice cream often comes out with ice agglomerations that are disagreeable to the taste. To solve this problem, it is necessary to use mixing and processing means that require longer production times. In addition, such machines allow the production of only one flavor at a time. The machine is also difficult to clean especially because of the shape of the mixing device. In fact, this device usually consists of a set of blades connected to a rotating pin that is in turn connected with the shaft of a drive motor. The blades and the pin have complex shapes because they are designed so as to provide a whirling movement of the mixture meant to avoid the formation of colder, or even frozen, zones and zones that are insufficiently cold; in other words, the ice cream would not be properly amalgamated, homogeneous and creamy without complex constructions and/or long production times.

On the other hand, these blades and the respective pin create many points to which the ice cream clings and tend to accumulate the ice cream toward the cap and the walls of the container. The result is that cleaning them becomes more laborious and there is a consequent waste of product.

In addition, it is necessary to handle food products that must be poured into the container housed within the refrigerating chamber, with the risk of bacterial contamination; in other words, there is a poor control of hygiene even when working in domestic environments. Further, the machine is not prearranged to provide single servings but quantities of product that must be consumed within a short time or must be stored back in a freezer. Finally, there is the requirement of washing the container after its use, especially when wishing to process ice cream of a different flavor from the previous ice cream.

### SUMMARY OF THE INVENTION

The main technical problem at the basis of the present invention is therefore to provide an ice-cream machine that has the capability of producing in shorter times an ice cream having excellent creaminess.

A second problem is to be able to offer a machine that is of simple construction and easy to clean.

A third problem is to provide a single serving of instant ice cream or multiple single servings of instant ice creams even with different flavors.

A further problem is to provide a machine capable of considerably lowering the risks of bacterial contamination of the product, especially when the machine is used in public places such as bars, ice-cream parlors, buffets, cinemas and similar gathering places.

These problems are solved by an ice-cream machine provided with components designed so as to allow an optimal processing of an alimentary compound of the ice cream without ice agglomerations, in a brief time and with components provided with a geometry such as to avoid the accumulation of product on the walls of the container and on the mixing means.

Further, the machine makes it possible to produce one or more single servings without the necessity of handling food ingredients, thus avoiding bacterial contaminations, especially in public places.

### BRIEF DESCRIPTION OF THE FIGURES

Further characteristics and the advantages of the ice-cream machine of the invention will become more evident from the following description of an embodiment given purely by way of a non-limiting example with reference to the following figures, wherein:
- figure 1 is a schematic axonometric view of the ice-cream machine according to the present invention;
- figure 2 is an exploded view of the inside of the machine of figure 1;
- figure 3 is an exploded axonometric view of the evaporator of the machine of the present invention with an open container of alimentary compound and mixing means of said alimentary compound to be processed;
- figures 4A, 4B and 4C illustrate respectively three side views from different angles of a transparent container of alimentary compound closed by the corresponding mixing means of figure 3 in partial lateral cross section;
- figure 5 is an axonometric view from above of the transparent container with the mixing means of figures 4A, 4B and 4C, without the closing cap;
- figure 6A is an axonometric view from above of the closing means of the evaporator of the machine of the present invention;
- figure 6B is an axonometric view from below of the closing means of figure 6A;
- figure 7 is an axonometric view of the partially disassembled machine of the present invention in a first operating condition;
- figure 8 shows the machine of figure 7 in a second operating condition;
- figure 9 illustrates the machine of figure 7 in a third operating condition;
- figure 10 illustrates the machine of figure 7 in a fourth operating condition;
- figure 11 is an exploded axonometric view of a particular evaporator of the inventive machine;
- figure 12 is a schematic view in lateral cross section of the assembled evaporator of figure 11;
- figure 13 is a schematic lateral cross sectional view of the assembled evaporator of figure 11 of the present invention, according to a variant embodiment.

### DETAILED DESCRIPTION OF THE INVENTION

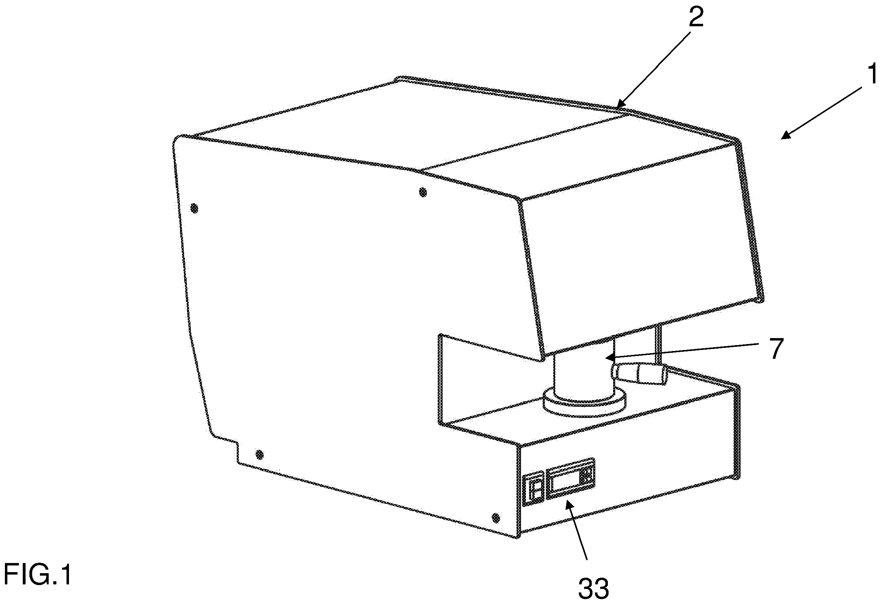

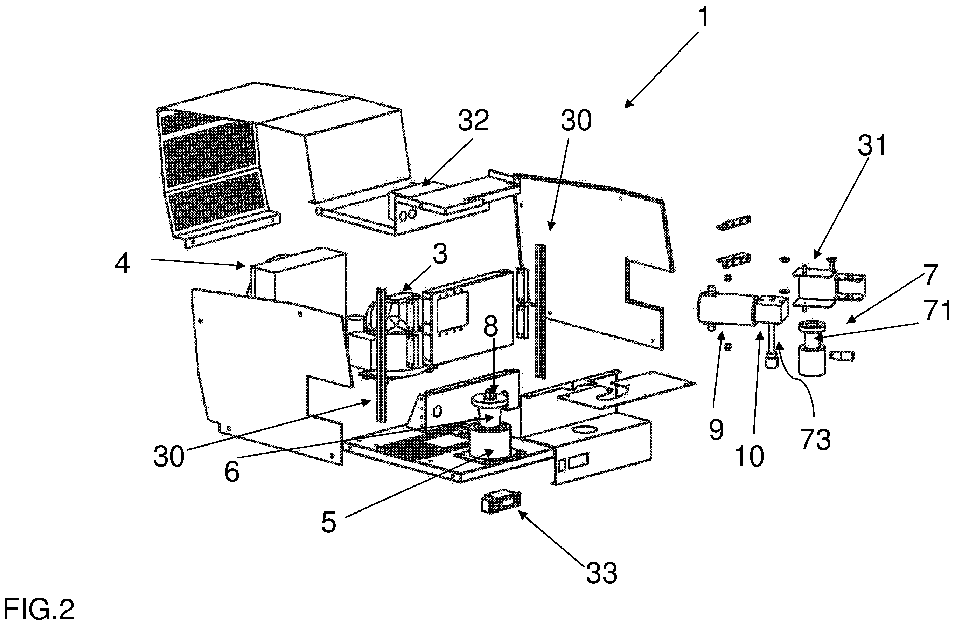

The ice-cream machine according to the present invention is generally shown in figure 1 and indicated with reference numeral 1. This machine 1 comprises an outer casing 2 adapted to enclose all the functional components and devices. In particular, as shown schematically in figure 2, within it the machine is provided with a cooling system with a refrigerating cycle that includes a compressor 3, a condenser 4, a thermal expansion device (not shown) and an evaporator 5. The evaporator is generally adapted to receive a container 6 for mixing the ingredients or a ready-made alimentary compound for producing ice cream. The evaporator can also be reversibly closed with closing means 7. Means 8 for mixing the alimentary compound contained in said container are provided and are connected to a corresponding motor 9 driven and controlled by suitable (manual or automatic) control means 10.

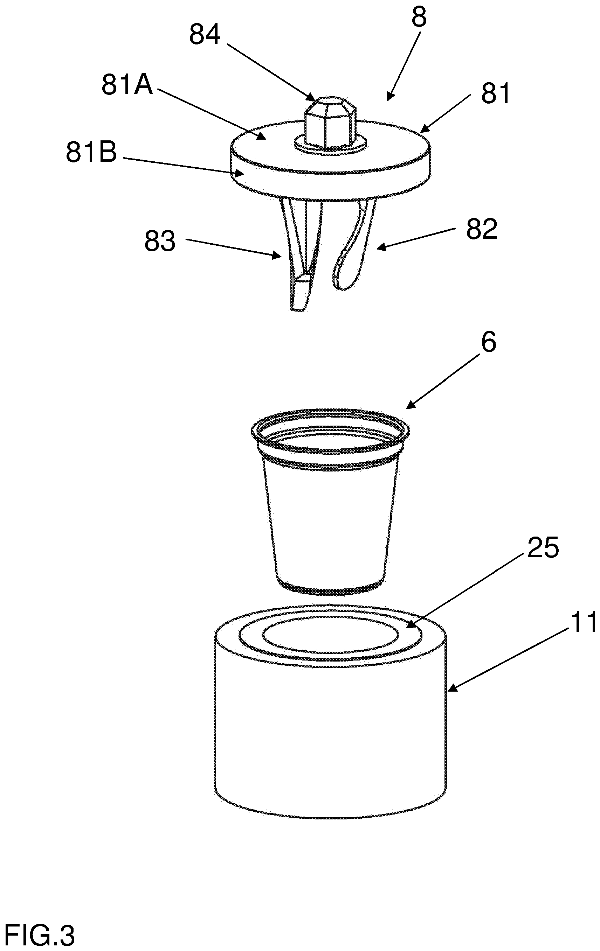

As shown in figure 3, the reference numeral 8 indicates mixing means for the alimentary compound contained in the container 6. This container can be, for example, a bowl or a tray preferably but not exclusively single-dose, closed by a relative film or lid, containing an alimentary preparation to be subjected to refrigeration and to simultaneous mixing to obtain an ice cream without requiring the addition of ingredients.

In particular, and according to a preferred embodiment of the invention, the container is a cup of yogurt type containing 80 to 150 g of a mixture of liquid or semiliquid ingredients, such as a purée, ready to be mixed during the refrigerating cycle to obtain ice cream.

The mixing means 8 includes advantageously a cap 81 for reversibly closing said container 6, a mixing element 82 adapted to mix said alimentary compound and a scraping element 83 adapted to scrape said alimentary compound from the walls of said container (figure 3). The cap 81 is any element suitable to reversibly close said container 6. Preferably, the cap 81 is provided with a flat circular bottom 81A from whose circumference extends an edge 81B generally perpendicular to said bottom and such as to reversibly engage the free edge of said container 6. The coupling can be achieved by means of projections, undercuts or, on the contrary, by notches cut along the internal wall of the edge 81B so as to allow a reversible joint with the free edge of said container 6.

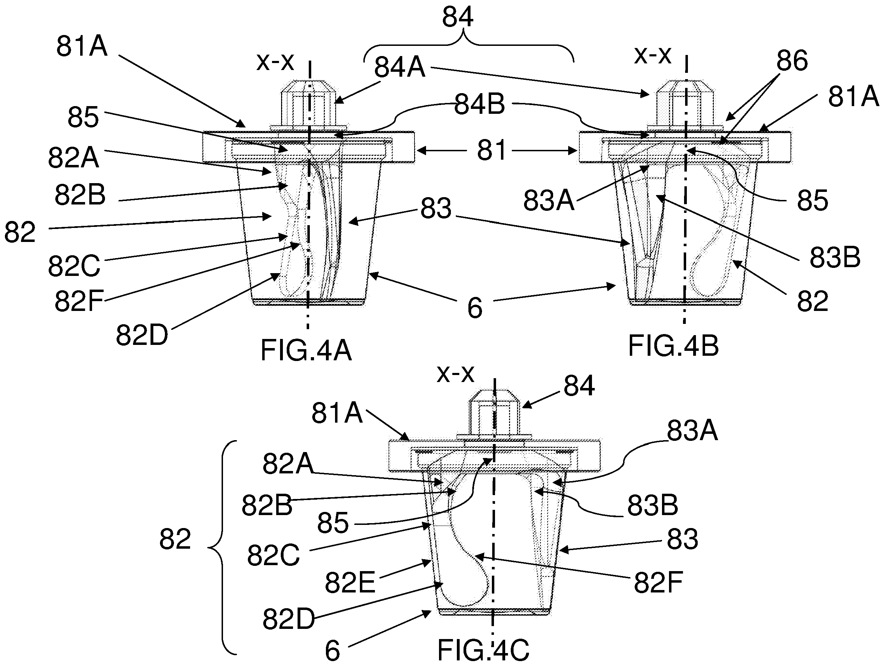

In particular, the bottom 81A is provided with a through hole (not shown in figures 4A-4C) that is engaged by a pin 84 coupled to the motor driving the mixing means 8. The pin 84 extends through said hole along a longitudinal axis X-X perpendicular to the bottom 81A. The pin 84 comprises a head 84A, protruding from the bottom 81A on the opposite side with respect to the edge 81B, and a connecting portion 84B to connect the mixing 82 and scraping 83 elements. Preferably, the head 84A has a hexagonal cross section for engaging a shaft of said drive motor. The portion 84B of the pin 84 is integral to a bridge portion 85 from which extend integrally said mixing 82 and scraping 83 elements. The pin 84 can be fastened to the hole of the cap 81 through a pair of flanges 86 "sandwiched" in position on the mouth of the hole (figure 4B).

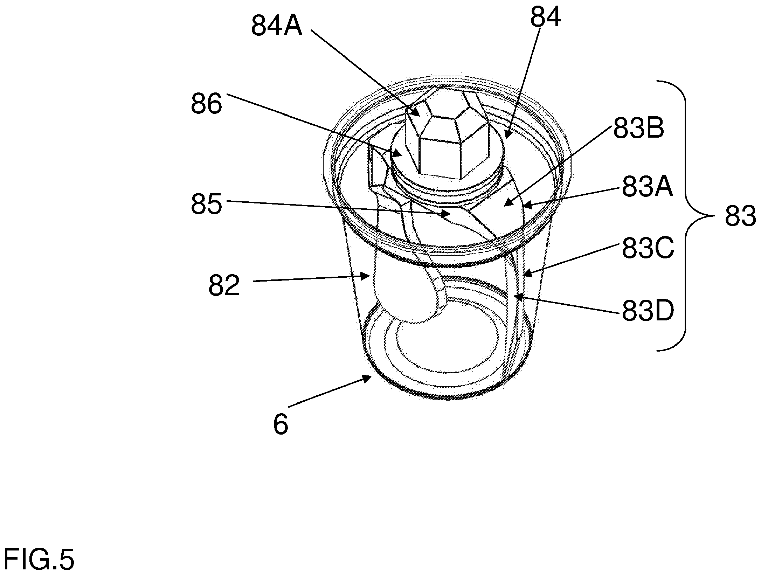

The bridge 85, as is better shown in figures 4C and 5, is a rectilinear bar orthogonal to the axis X-X of the pin 84, from the opposite ends of which said mixing 82 and scraping 83 elements extend parallel to the axis X-X and in the opposite direction with respect to said pin.

The mixing element 82 is preferably in the general shape of a spatula with a first portion 82A connected to the bridge 85. This portion is provided with a surface 82B concave toward the scraping element 83 and toward the free end of the scraper, and is tapered away from the bridge (figures 4A and 4B). In other words, the surface 82B has a curved and generally triangular shape. A thinner second portion 82C connects said first portion 82A with a spoon-shaped third portion 82D provided with two opposite surfaces that extend radially, that is along the extension of the bridge 85 (figure 4C). In particular, the second portion 82C and the third portion 82D are provided with a thinner and rectilinear first edge 82E (figure 4C) adapted to graze the inner wall of said container 6. A second thinner edge 82F at the third portion 82D forms a curve, preferably circular, that fans out toward the scraper.

It should be noted that this preferred embodiment of the mixer makes it possible to achieve the best mixing results of the alimentary compound so as to cyclically bring the whole alimentary compound into contact with the walls of the container 6 as a thin layer. With this geometry of the mixer, the alimentary compound on one hand is homogenized and blended uniformly, and on the other hand, it cools faster.

The scraping element 83 is also provided with a first portion 83A directly connected with the bridge 85 and having a surface 83B concave toward the mixing element 82 and toward the free end of the mixer (figures 4B and 4C). A second portion 83C extends from said first portion 83A and is generally in the shape of a blade with a pointed end. In particular, the second portion 83C is rotated axially so as to have a thin and rectilinear edge 83D, advantageously adapted to scrape the internal walls of said container 6. Further, the rotation of the second portion 83C is such as to convey the portion of alimentary compound scraped from the internal wall of the container 6 toward the mixing element 82 (figure 5). In this manner, the combined action of the mixing element 82, which with its rotation cyclically moves the portions of alimentary compound that are near the central axis X-X toward the periphery, and of the scraping element 83 which with its rotation conveys the portions of alimentary compound adjacent to the wall of the container 6 toward the mixing element, achieves an optimal distribution of the whole alimentary compound to be treated, as well as an optimal creaminess of the final product, which gives it an equally optimal appearance, smoothness and palatability.

The refrigerating system comprises completely conventional elements such as a compressor 3, a condenser 4, a thermal expansion device (not shown) and an evaporator 5, which, being already mentioned, will not be described hereunder.

In particular, the closing means 7 for the evaporator 5 can consist of a conventional cap.

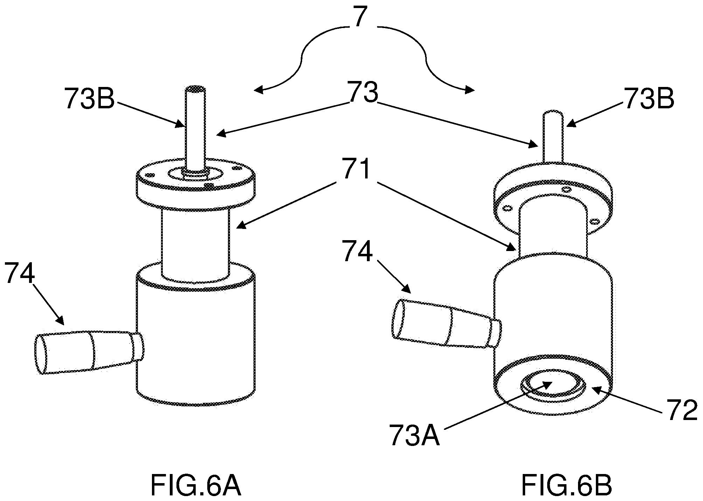

Preferably, as shown in figures 1, 6A and 6B, said means comprise a hollow body 71 provided with an edge 72 to close the evaporator. Inside the hollow body 71 is positioned a drive shaft 73. The drive shaft comprises a first end 73A located in correspondence of the hollow body closing edge 72 so as not to protrude from the hollow body (figure 6B). The second end 73B (figures 6A, 6B) protrudes from the opposite side of the hollow body with respect to its edge 72 for connection with the motor 9.

According to a variant embodiment, the hollow body 71 comprises a hand grip 74 (figures 6A, 6B) for manually moving the same body in a vertical and a horizontal direction, as will be described later. Alternatively, the hollow body can be moved automatically through completely conventional means, which therefore will not be described in detail here. In any case, the hollow body 71 is moved for example in the vertical direction through the use of a pair of guides 30 (figure 2), while the horizontal movement is provided for example through a pivoting rotation of the motor on a relative support 31 so as to move along an arc, as described below.

The motor 9 driving the mixing means 8 is also completely conventional and, preferably, is connected to a control device 10 such as a reduction unit, also of known type (figure 2).

A command and control unit 32 (figure 2) is operatively connected to both the refrigerating circuit and to the motor 9 and relative reduction unit 10. The command and control unit is also connected to a thermometer (not shown) of the evaporator 5 to control its temperature.

An interface 33 with the user comprises for example a display to monitor the status of the machine and the ice cream production programs. The interface also includes a mechanical or electronic button strip used to set the programs on the machine.

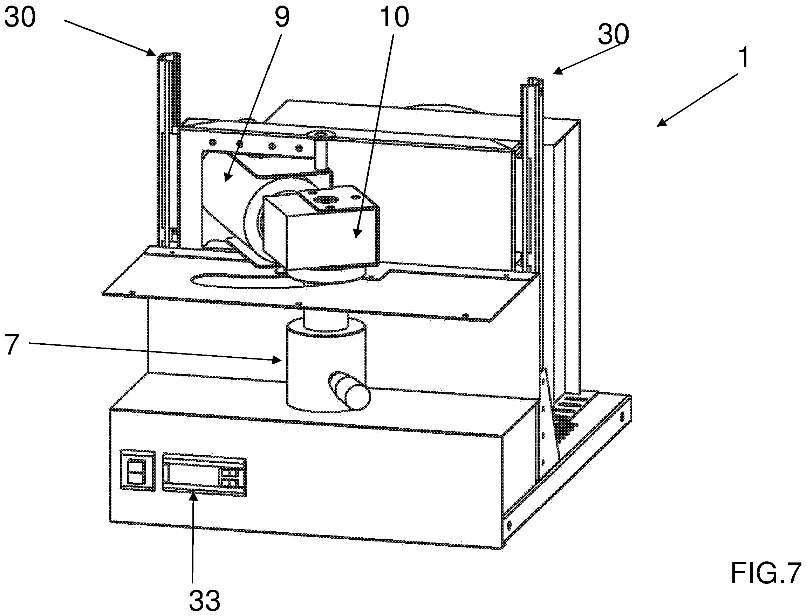

With particular reference to figures 7, 8, 9, 10, the operation of the ice-cream machine according to the present invention will now be described.

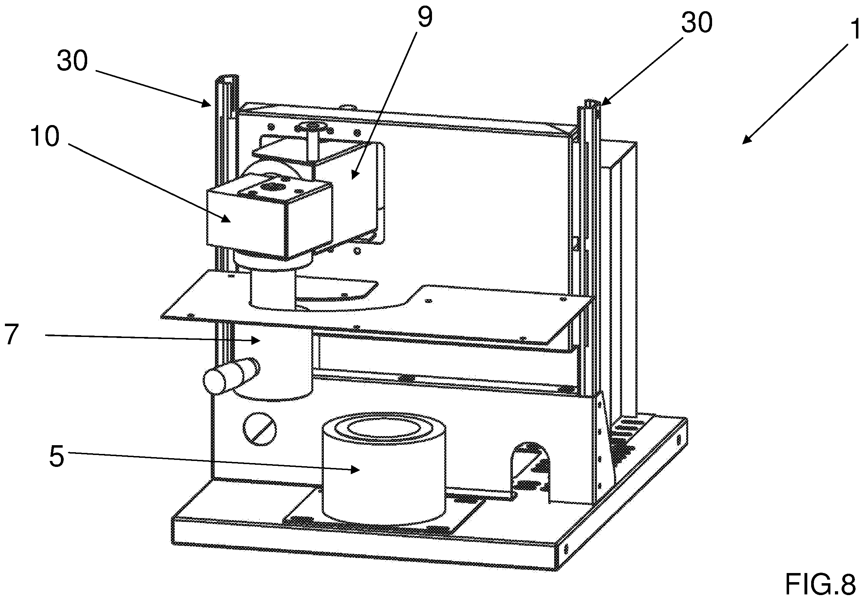

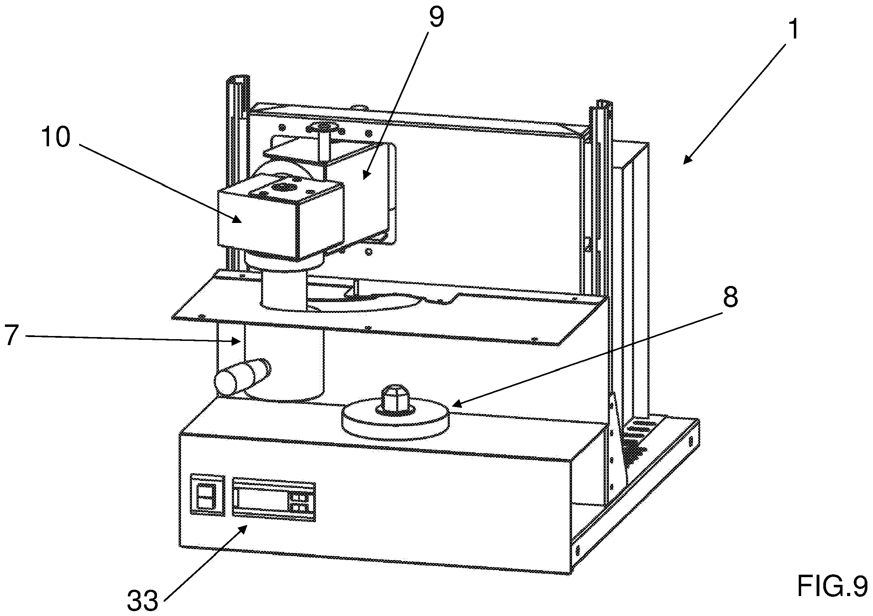

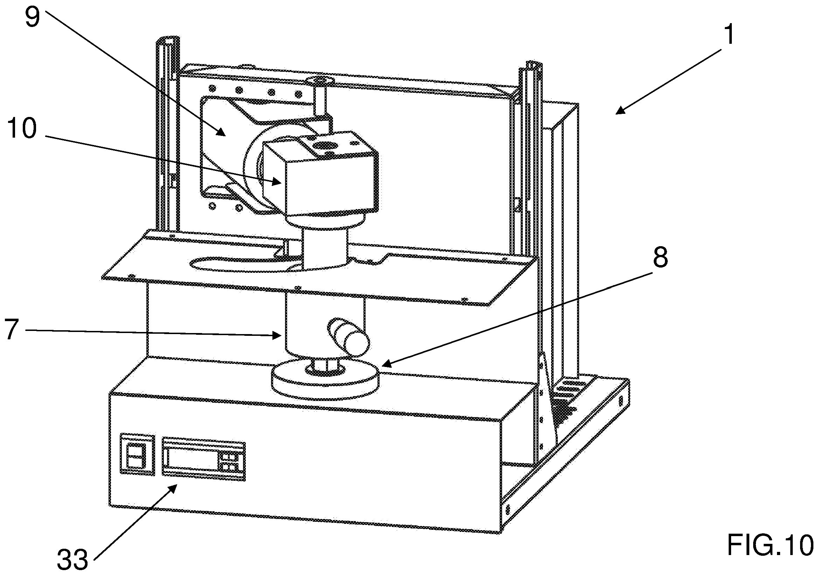

In a first operating condition, as shown in figure 7, the means 7 for closing the evaporator 5 are in a closed position. The machine is switched on and it automatically reaches the operating temperature (-10°C/-50°C inside the evaporator, achieved in 6-10 minutes). When this temperature is reached, the closing means 7 are set automatically or manually in the open position, as in figure 8; preferably, the closing means 7 are first lifted vertically and then moved horizontally. At this point, a container 6 of alimentary compound is closed by the mixing means 8 so that the cap 81 sealingly engages the free edge of said container. In this position, the mixing means 82 and the scraping means 83 are immersed in the alimentary compound. The container 6, as shown in figure 9, is now placed inside the evaporator. Then (figure 10), the closing means 7 are moved, in the automatic or manual mode, to the closing position, moving inversely with respect to the previously described sequence in a manner such that the end 73A of the drive motor 9 shaft 73 engages the mixing means 8 through the head 84A of the pin 84. Preferably, this engagement operation (and only this operation) activates safely and in an automatic mode (there being no harmful elements that can be in contact with parts of the human body) the mixing means 8 for the instantaneous production of ice cream. The rotation of the mixing 82 and scraping 83 elements of the mixing means 8 is applied at a speed of 20 to 300 rpm, depending on the type of alimentary compound used, that is, the ingredients and the ice cream flavor desired. At the end of the preset program, the mixing means automatically stop. After the removal of the cap 81 with the corresponding mixing 82 and scraping 83 elements, the closing means 7 move to the opening position, as previously described, to allow the extraction of the container 6 from the evaporator 5 with the product ready to be used. During these operations, the machine remains always switched on so that the evaporator 5 remains always at the operating temperature and ready for use. To improve the efficiency of the machine, when the container 6 with the connected mixing means 8 is extracted from the evaporator the closing means 7 are placed again in the closing position to improve the thermal efficiency of the evaporator and cut down energy losses from the system, as well as to reduce the formation of frost on the internal walls of the evaporator.

In addition, the machine of the present invention can be used to make sherbets or popsicles; in the first case, the speed and/or treatment time will be set on the basis of the desired fluidity of the product, while in the second case the mixing means 8 will not be inserted into the container and the machine will be closed by a conventional cover or, preferably, by the hollow body 71.

Advantageously, as mentioned above, the two elements, mixer 82 and scraper 83, have been designed to achieve an optimal mixing of the alimentary compound in order to allow a homogeneous and constant distribution of the compound throughout the volume of the container so as to guarantee a rapid and even cooling of the whole compound and at the same time an optimal creaminess and smoothness. In fact, the mixing element 82 with its external edge 82C that substantially brushes against the internal wall of the container in all its height makes it possible to spread the alimentary compound on said wall in the form of a thin layer, while the third portion 82D with its internal edge 82F mixes this part of alimentary compound that is at the center of the container. In a diametrically opposite position, the scraping element 83, thanks to its shape as a rotated blade, scrapes that part of the alimentary compound that tends to cling to the internal wall of the container and moves it toward the center where it is mixed by the mixing element 82 as explained. In fact, if that portion remained clinging to the internal wall of the container for a longer period, it would tend to harden and create an undesirable insulating effect against the cold transmitted by the evaporator 5 all around the container 6.

In addition, it should be noted that the particular shape of the first portions 82A and 83A respectively of the mixing 82 and scraping 83 elements with their surfaces 82B and 83B, makes it possible to avoid that part of the alimentary compound is pushed toward the cap 81 and piles up there, thus without properly mixing with the rest of the alimentary compound. In other words, as the two above surfaces are turned downward, that is, toward the free end of the mixing 82 and scraping 83 elements, they collect that part of the alimentary compound that with the mixing is pushed upward and allows it to drop.

When the refrigerating cycle for transforming the alimentary compound into a creamy ice cream is completed, the motor 9 is stopped manually or automatically. For a quantity of 80-150 g of alimentary compound, the procedure for preparing ice cream with the machine according to the present invention requires only from 12 to 18 minutes from the moment when the evaporator reaches the operating temperature, depending on the type and quality of the ice cream. Therefore, at the end of the process, the mixing means 8 is stopped, the hollow body 71 is lifted and, preferably, moved to a side with manual or automatic maneuvers in reverse sequence with respect to those previously described. The container 6 is preferably extracted from the evaporator 5. Then, the cap 81 of the mixing means 8 is lifted by uncoupling the above-mentioned restraints between the edge of the cap 81 and the container 6 and the portion of ice cream is ready to be served. In the case in which a container for a single portion is used, the ice cream can be served without further transfers; instead, if the container has a capacity of 400-1000 g, the ice cream can be transferred and served in appropriate bowls, cones, or placed in a freezer to be served later.

If a container for a single portion is used, the container can be disposed of to be recycled as is normally done through conventional plastic recycling. If a multi-portion container or a non-disposable container is used, it can be washed by hand or in a dishwasher, together with the cap 81 and the respective mixing means 8, to be used again for the production of a new batch of ice cream.

Advantageously, once the container is extracted from the evaporator when the ice cream production process is completed, the hollow body 71 is repositioned to cover the evaporator 5 so as to prevent the entrance of moist air, which, by cooling on the walls of the evaporator, would form a layer of frost. This frost layer would tend to act as insulation, with a resulting slowing down of a subsequent ice-cream production cycle. This operation can be preset in the automatic mode after extracting the container, so as to relieve the operator from having to remember to close the machine.

According to a preferred embodiment of the invention, it was discovered that by providing the inventive machine with the particular evaporator described in patent application No. MI2014A001012, the above refrigerating times, that is, the preparation of the ice cream, could surprisingly be further reduced to produce ice cream practically instantly.

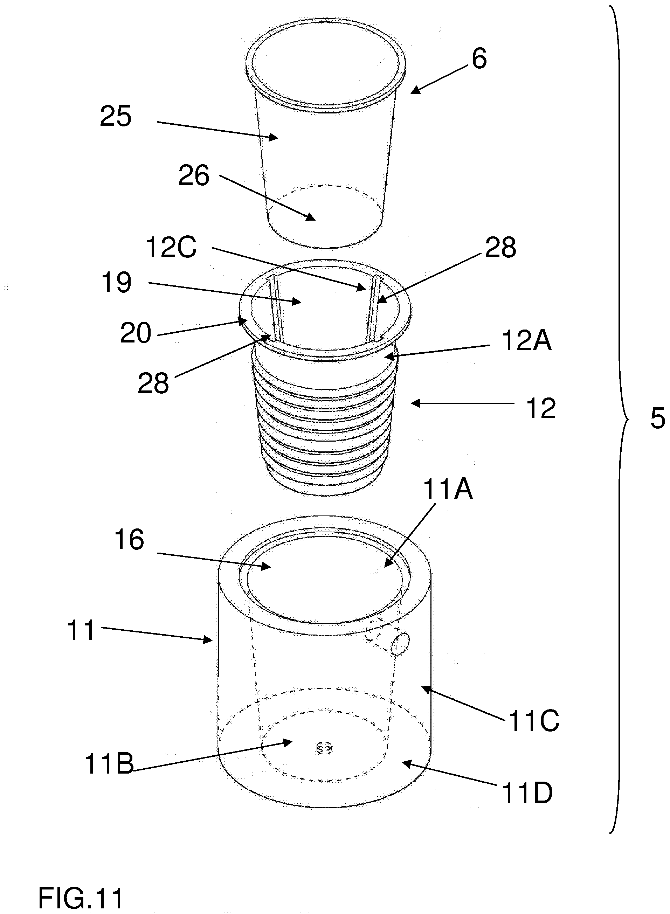

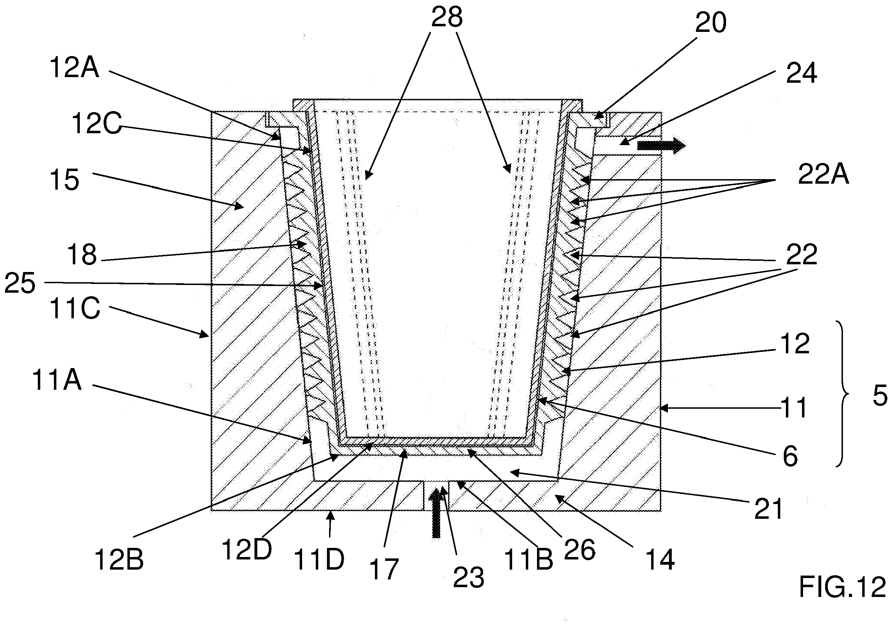

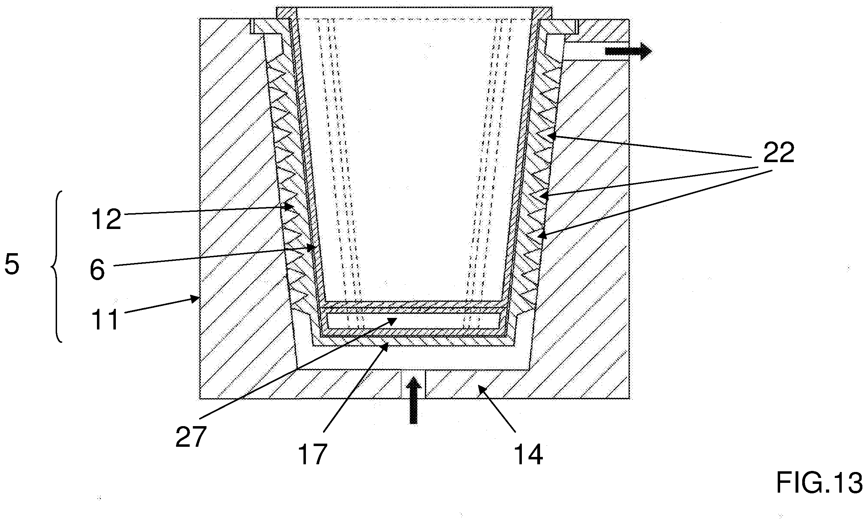

As shown with reference to figures 11-13, the evaporator 5 comprises a first container 11 and a second container 12 received in the first container. The second container 12 is configured to receive within it a third removable container 6 intended to contain the batch or base of alimentary compound to be processed. Advantageously, the first container 11 and the second container 12 have opposing surfaces configured and arranged to form in cooperation with one another a passage 22 (shown in figures 12 and 13) for circulating the coolant used in the refrigerating cycle. The first container 11 has internal surfaces 11A, 11B that delimit the space that holds the second container 12 and external surfaces 11C, 11D that delimit the external shape of the evaporator 5. The second container 12 has external surfaces 12A, 12B (the latter identified in figures 12 and 13) respectively opposite the internal surfaces 11A, 11B of the first container 11 and internal surfaces 12C, 12D (the latter indicated in figures 12 and 13) that delimit the space that holds the third container 6. The internal surfaces 11A, 11B of the first container 11 delimit the passage 22 in cooperation with the opposing external surfaces 12A, 12B respectively of the second container 12.

The first container 11 in particular has a bottom 14 and a lateral wall 15, the latter delimiting with its end opposite the bottom an access mouth 16 for the second container 12. The surface 11A and respectively 11C is therefore the internal surface and respectively the external surface of the lateral wall 15, while the surface 11B and respectively 11D is the internal surface and respectively the external surface of the bottom 14.

The second container 12 has in turn a bottom 17 and a lateral wall 18 (figure 12) that delimits with its end opposite to the bottom an access mouth 19 (figure 11) for the third container 6, for example a glass or a cup. The surface 12C and respectively 12A is therefore the internal surface and respectively the external surface of the lateral wall 18, while the surface 12D and respectively 12B is the internal surface and respectively the external surface of the bottom 17.

The passage 22 extends at least around a portion of the lateral wall 18 of the second container 12 comprising the connecting end to its bottom 17. The passage 22, in particular, rises from the bottom 17 of the second container 12 up to a level that is not lower than the maximum level expected for the alimentary compound in the third container 6, when the latter is positioned in the second container 12. At least in this specific portion, the lateral wall 18 of the second container 12 has a uniform thickness. Further, preferably at least this specific portion of the lateral wall 18 of the second container 12 is conical.

In particular, the second container 12 has its entire lateral wall 18 of uniform thickness and its bottom 17 is also of uniform thickness having a value equal to the thickness of its lateral wall 18. The second container 12 is then positioned with its bottom 17 turned toward the bottom 14 of the first container 11 and its lateral wall 18 facing the lateral wall 15 of the first container 11. The external surface 12A of the lateral wall 18 of the second container 12 is suitably spaced from the opposite internal surface 11A of the lateral wall 15 of the first container 11. Preferably, the distance between the external surface 12A of the lateral wall 18 of the second container 12 and the internal surface 11A of the lateral wall 15 of the first container 11 is constant in the direction going from the bottom 14, 17 to the access mouth 16, 19 of the containers 11, 12.

Further, the first container 11 has a bottom 14 having a flat circular shape and the lateral wall 15 being internally in the shape of a cone tapered toward the bottom 14, and the second container 12 has a bottom 17 having a flat circular shape and the lateral wall 18 is internally and externally in the shape of a cone tapered toward the bottom 17 and having the same taper ratio as the internal surface of the lateral wall 15 of the first container 11. The second container 12, more specifically, is positioned with its bottom 17 parallel to the bottom 14 of the first container 11 and has the conical internal surface of its lateral wall 18 coaxial with the internal and external conical surface of the lateral wall 15 of the first container 11.

The passage 22 extends advantageously along a helical pathway around the lateral wall 18 of the second container 12. Advantageously, the passage 22 is bounded by a thread 22A formed on the lateral wall of one or the other of either the first container 11 or of the second container 12. In this specific case, the thread 22A is formed on the external surface 12A of the lateral wall 18 of the second container 12. The peaks of the threads 22A press sealingly tight against the internal surface 11A of the lateral wall 15 of the first container 11. The coils of the threads 22A have a constant pitch and height, meaning there is a differential between the diameter measured at the peak and the diameter measured at the root, which is also constant. Obviously, the height of the thread rings 22A is not less than the distance between the external surface 12A of the lateral wall 18 of the second container 12 and the internal surface 11A of the lateral wall 15 of the first container 11 so as to make it possible to create the necessary tight seal in the course of assembling when, during the insertion of the second container 12 into the first container 11, the thread rings 22A are forced against the internal surface 11A of the lateral wall 15 of the first container 11.

Naturally, the shape of the first container 11 and of the second container 12 can be different from the shape described above. For example, both the first container 11 and the second container 12 can be made to be internally and externally cylindrical in shape.

The lateral wall 18 of the second container 12 is provided with a top flange 20 to sealingly fasten the container 12 to the top edge of the lateral wall 15 of the first container 11. This fastening is preferably achieved by welding. Between the bottom 14 of the first container 11 and the bottom 17 of the second container 12 there is a gap 21 in fluid communication with the passage 22. The bottom 14 of the first container 11 has a calibrated through hole 23 for the inflow of the refrigerating fluid into the gap 21. The lateral wall 15 of the first container 11 is provided at the top with a calibrated through hole 24 for the outflow of the refrigerant from the passage 22.

The third container 6 can be removably positioned in the second container 12 to allow the metering of the ingredients of the alimentary compound even from a position remote from the machine. The third container 6 has a lateral wall 25 and a bottom 26.

The second container 12 is coupled through its shape with the third container 6. When the third container 6 is inserted into the second container 12, the lateral wall 25 of the third container 6 is uniformly in direct contact with the internal surface 12C of the lateral wall 18 of the second container 12, while the bottom 26 of the third container 6 is uniformly in direct contact with the internal surface 12D of the bottom 17 of the second container 12 or, alternatively, in the cases in which it is not possible to ensure a direct contact between the bottom 26 of the third container 6 and the bottom 17 of the second container 12, it is in contact with a thermally conductive element 27 (figure 13), suitably positioned to fill the existing space between the bottom 26 of the third container 6 and the bottom 17 of the second container 12.

If such a thermally conductive element is foreseen, preferably it is of a type containing a refrigerating fluid. Naturally, in other modes of embodying the invention one or more thermally conductive elements of this type can be positioned wherever there are spaces between the second container 12 and the third container 6. The internal surface 12C of the lateral wall 18 of the second container 12 is provided with grooves 28 for venting the air trapped between the third container 6 and the second container 12 during the insertion of the third container 6 into the second container 12. The grooves 28 extend preferably along the axial generating lines of the internal surface 12C of the lateral wall 18 of the second container 12.

The operation of the evaporator 5 is briefly as follows. The refrigerant of the circuit of the refrigerating cycle enters into the evaporator 1 through the inflow hole 23 and leaves the evaporator 5 through the outflow hole 24 after having flowed in cascade in the evaporator 5 through the gap 21 and the passage 22. Advantageously, at least up to maximum level expected for the alimentary compound in the third container 6, when said container is positioned inside the second container 12, the external surfaces 12A, 12B of the second container 12 are entirely and directly wetted by the refrigerating fluid. This makes the refrigerating system of the third container 6 extremely efficient: by convection, the refrigerating energy of the refrigerating fluid is transmitted uniformly directly, without the interposition of other means, to the second container 12, and this refrigerating energy received by the second container 12 is transmitted, by conduction, directly without the interposition of other means to the third container 6. Moreover, the shape of the passage 22 that winds around the second container 12 extends the time of the interaction between the refrigerant and the second container 12, thus contributing to improving the efficiency of the refrigerating system.

From what explained above, it is evident that all the drawbacks of the prior art ice-cream machine have been resolved.

First of all, an optimal degree of creaminess was achieved. At the same time, the production times were shortened, thus making it possible to supply an ice cream in shorter times compared to the prior art machines, thanks to the action of special mixing means. Moreover, with the combined use of the evaporator 5, the ice cream can substantially be produced in an instant.

For example, with a traditional evaporator and using the mixing means of the present invention it is possible to produce a quantity of ice cream of about 400 g in about 14 minutes. With the particular evaporator described here, this time can be shortened to about 8-10 minutes. Moreover, if the quantity of ice cream is a single scoop of 80-150 g, the preparation time is as short as 2 to 4 minutes, depending on the type of ingredients used to produce a specific ice cream flavor. Further, to produce a sherbet of about 80-150 g, with the particular evaporator the production time is less than 2 minutes and the production time for a 100 g popsicle is at most 5 minutes.

The machine is simple in construction and easy to clean after every production cycle. In fact, on one hand is present either the third container of the evaporator, that is, a conventional container, or a recyclable container, and on the other hand the mixing means have been studied to prevent the ice cream from sticking to the cap and to the mixing and scraping elements.

Moreover, the arrangement of the machine for also making single-dose portions for which the alimentary compound can be previously prepared in sealed jars of yogurt type that are opened only the moment when they are introduced into the machine, guarantees an optimal control from the hygienic point of view. In fact, handling is cut down to a minimum, and thus also the consequent risk of bacterial contamination, especially in public places.

The quantities of ice cream may vary from single servings of 80-150 g to multiple servings amounting to 400-1000 g. In the case of single servings, cups of yogurt type can be used, making it possible to hold the product in the hands even if very cold.

It must be remembered that all the adaptations of the machine to produce multiple single servings or only one serving for a number of consumers are absolutely within the ability of the technician skilled in the field, as they involve a suitable proportioning of the various components.

The materials used particularly for the containers and/or mixing means can be plastic substances for alimentary uses (for example acetal resin, POM, PET), transparent or colored, or metals such as stainless steel, aluminum, or equivalent materials.

The system for moving the hollow cylinder 71 that is provided with the drive shaft 73 of the mixing means 8 can also be only vertical, without having to be combined with the horizontal system. In any case, the vertical or horizontal movement can be manual or powered, for example with a gas-driven piston system.

## Claims

1. Ice-cream machine (1) provided with an outer casing (2) including a compressor (3), a condenser (4), a lamination element, an evaporator (5), a container (6) for an alimentary compound cooled by the evaporator, closing means (7) of the evaporator, mixing means (8) of the alimentary compound contained in said container, said mixing means being connectable to a corresponding motor (9), said mixing means (8) comprising a cap (81) to reversibly close said container (6) of the alimentary compound, a mixing element (82) comprising a first edge (82E) adapted to spread a layer of said alimentary compound into contact along all the inner wall of said container and a second edge (82F) adapted to mix said alimentary compound, and a scraping element (83) adapted to scrape said layer of alimentary compound from the wall of said container after the layer has been spread therein **characterized in that** said mixing element (82) and said scraping element (83) extend parallel to an axis (X-X), which is orthogonal to said cap (81), and they are diametrically opposed with respect to said cap (81) and are integral with a bridge (85) being a rectilinear bar orthogonal to the axis (X-X), from the opposite end of which bar said mixing element (82) and scraping element (83) extend with respective first portions (82A, 83A) close to said cap (81), each first portion (82A, 83A) being provided with a surface (82B, 83B) which is concave toward and inclined toward the free ends of the corresponding opposed element, the mixing element (82) further comprising a second portion (82C), thinner than the first portion, for connection between said first portion (82A), and a third portion (82D), said third portion being shaped as a spoon and provided with two opposite surfaces radially extending, and wherein said scraping element (83) comprises a second portion (83C) extending from said first portion (83A) and having a general shape of a blade with a sharp edge, the second portion (83C) being axially rotated to have a thin and rectlinear edge (83D) adapted to scrape the inner wall of said container (6).

2. Machine (1) according to claim 1, wherein said cap (81) comprises a flat and circular bottom (81A) provided with a middle hole, from the circumference of the bottom an edge (81B) extends generally perpendicular herein and so that it reversibly engages with the free edge of said container (6).

3. Machine (1) according to claim 2, wherein said hole of the bottom (81A) is crossed by a pin (84) extending along said axis (X-X), the pin (84) comprising a head (84A) protruding from the bottom (81A) on the opposite side with respect to the edge (81B), and a connecting portion (84B) to connect the mixing (82) and scraping (83) elements by means of said bridge (85).

4. Machine (1) according to claim 3, wherein said closing means (7) of the evaporator (5) comprises a hollow body (71) provided with an edge (72) to close the evaporator, into said body a motor shaft (73) is positioned and comprises a first end (73A) located in correspondence of said edge (72) so that not to protrude herein and so that to engage with the head (84A) of said pin (84), said shaft comprising a second end (73B) for connection with the motor (9).

5. Machine (1) according to any one of claims 1-4, wherein said evaporator (5) comprises a first container (11), a second container (12) housed in a fixed manner into the first container (11) and adapted to receive in a movable manner said container (6) for an alimentary compound, the first container (11) and the second container (12) having facing surfaces (11A, 12A) shaped to form in cooperation to each other a passage (22) to circulate a refrigerant fluid.

6. Machine (1) according to claim 5, wherein the first container (11) is provided with a bottom (14) and a lateral wall (15), and wherein said second container (12) is provided with a bottom (17) and a lateral wall (18), said passage (22) running along an helical pathway around said lateral wall (18) of the second container (12).

7. Machine (1) according to claim 6, wherein said passage (22) is bounded by a thread (22A) formed on the lateral wall (15, 18) of one of said first and second (11, 12) containers, the rings of said thread (22A) have a peak which seals against the lateral wall (15, 18) of the other of said first or second container (11, 12).

## Patentansprüche

1. Vorrichtung zur Herstellung von Speiseeis (1), die mit einem äußeren Gehäuse (2) versehen ist, das enthält: einen Kompressor (3), einen Kondensor (4), ein Laminierungselement, einen Verdampfer (5), einen Behälter (6) für eine Nahrungsmittelverbindung, die von dem Verdampfer gekühlt wird, eine Schließeinrichtung (7) des Verdampfers, eine Mischeinrichtung (8) für die in dem Behälter enthaltene Nahrungsmittelverbindung, wobei die Mischeinrichtung mit einem entsprechenden Motor (9) verbindbar ist und die Mischeinrichtung (8) eine Abdeckung (81) zum reversiblen Verschließen des Behälters (6) der Nahrungsmittelverbindung aufweist, ein Mischelement (82) mit einer ersten Kante (82E), die ausgebildet ist, eine Schicht der Nahrungsmittelverbindung berührend entlang der gesamten Innenwand des Behälters zu verteilen, und mit einer zweiten Kante (82F), die ausgebildet ist, die Nahrungsmittelverbindung zu mischen, und ein Schaberelement (83), das ausgebildet ist, die Schicht aus Nahrungsmittelverbindung von der Wand des Behälters nach dem Verteilen der Schicht darin abzuschaben,
**dadurch gekennzeichnet, dass**
das Mischelement (82) und das Schaberelement (83) parallel zu einer Achse (X-X) verlaufen, die senkrecht zu der Abdeckung (81) ist, und dass sie diametral entgegengesetzt in Bezug auf die Abdeckung (81) liegen und integral mit einer Brücke (85) vorgesehen sind, die ein gerader Stab ist, der senkrecht zu der Achse (X-X) ist, wobei von dem entgegengesetzten Ende des Stabes sich das Mischelement (82) und das Schaberelement (83) sich mit entsprechenden ersten Bereichen (82A, 83A) bis in die Nähe der Abdeckung (81) erstrekken, wobei jeder erste Bereich (82A, 83A) mit einer Oberfläche (82B, 83B) versehen ist, die zu den freien Enden des entsprechenden gegenüberliegenden Elements hin konkav und geneigt ist, wobei das Mischelement (82) ferner einen zweiten Bereich (82C) aufweist, der dünner ist als der erste Bereich, um eine Verbindung zwischen dem ersten Bereich (82A) und einem dritten Bereich (82D) zu bilden, wobei der dritte Bereich als ein Löffel geformt und mit zwei gegenüberliegenden Oberflächen versehen ist, die sich radial erstrecken, und wobei das Schaberelement (83) einen zweiten Bereich (83C) aufweist, der sich von dem ersten Bereich (83A) erstreckt und eine generelle Form einer Klinge mit einer scharfen Kante hat, wobei der zweite Bereich (83C) axial so gedreht ist, dass er eine dünne und gerade Kante (83D) hat, die ausgebildet ist, die Innenwand des Behälters (6) abzuschaben.

2. Vorrichtung (1) nach Anspruch 1, wobei die Abdeckung (81) einen flachen und kreisförmigen Boden (81A) hat, der mit einer Mittelbohrung versehen ist, wobei vom Umfang des Bodens sich eine Kante (81B) im Wesentlichen senkrecht derart erstreckt, dass sie reversibel mit der freien Kante des Behälters (6) im Eingriff ist.

3. Vorrichtung (1) nach Anspruch 2, wobei die Bohrung des Bodens (81A) von einem Stift (84) gekreuzt wird, der sich entlang der Achse (X-X) erstreckt, wobei der Stift (84) einen Kopf (84A), der aus dem Boden (81A) auf der gegenüberliegenden Seite in Bezug auf die Kante (81B) hervorsteht, und einen Verbindungsbereich (84B) aufweist, der das Mischelement (82) und das Schaberelement (83) durch die Brücke (85) verbindet.

4. Vorrichtung (1) nach Anspruch 3, wobei die Schließeinrichtung (7) des Verdampfers (5) einen hohlen Körper (71) aufweist, der mit einer Kante (72) zum Verschließen des Verdampfers versehen ist, wobei in dem Körper eine Motorwelle (73) angeordnet ist und ein erstes Ende (73A) aufweist, das entsprechend zu der Kante (72) derart angeordnet ist, dass es nicht hervorsteht und dass es nicht mit dem Kopf (84A) des Stifts (84) in Eingriff ist, wobei die Welle ein zweites Ende (73B) zum Verbinden mit dem Motor (9) aufweist.

5. Vorrichtung (1) nach einem der Ansprüche 1-4, wobei der Verdampfer (5) einen ersten Behälter (11) und einen zweiten Behälter (12) aufweist, der fixiert in dem ersten Behälter (11) aufgenommen und ausgebildet ist, den Behälter (6) für eine Nahrungsmittelverbindung beweglich aufzunehmen, wobei der erste Behälter (11) und der zweite Behälter (12) einander zugewandte Flächen (11A, 12A) haben, die so geformt sind, dass sie zusammen einen Durchgang (22) zum Umwälzen eines Kühlfluids bilden.

6. Vorrichtung (1) nach Anspruch 5, wobei der erste Behälter (11) mit einem Boden (14) und einer Seitenwand (15) versehen ist, und wobei der zweite Behälter (12) mit einem Boden (17) und einer Seitenwand (18) versehen ist, und wobei der Durchgang (22) entlang eines spiralförmigen Kanals um die Seitenwand (18) des zweiten Behälters (12) verläuft.

7. Vorrichtung (1) nach Anspruch 6, wobei der Durchgang (22) durch ein Gewinde (22A) begrenzt ist, das an der Seitenwand (15, 18) des eines Behälters des ersten oder des zweiten (11, 12) Behälters ausgebildet ist, wobei die Windungen des Gewindes (22A) einen obersten Punkt haben, der eine Abdichtung gegenüber der Seitenwand (15, 18) des anderen Behälters des ersten oder des zweiten Behälters (11, 12) bildet.

## Revendications

1. Machine à crème glacée (1) dotée d'un logement extérieure (2) comprenant un compresseur (3), un condenseur (4), un élément de lamination, un évaporateur (5), un récipient (6) pour un composé alimentaire refroidi par l'évaporateur, un moyen de fermeture (7) de l'évaporateur, un moyen de mélange (8) du composé alimentaire contenu dans ledit récipient, ledit moyen de mélange pouvant être connecté à un moteur correspondant (9), ledit moyen de mélange (8) comprenant un capuchon (81) pour fermer de manière réversible ledit récipient (6) du composé alimentaire, un élément mélangeur (82) comprenant un premier bord (82E) adapté à étaler une couche dudit composé alimentaire en contact avec tout le long de la paroi interne dudit récipient et un second bord (82F) adapté à mélanger ledit composé alimentaire, et un élément racleur (83) adapté à racler ladite couche de composé alimentaire de la paroi dudit récipient après que la couche y a été étalée, **caractérisée en ce que** ledit élément mélangeur (82) et ledit élément racleur (83) s'étendent parallèlement à un axe (X-X), qui est orthogonal audit capuchon (81), et ils sont diamétralement opposés par rapport audit capuchon (81) et formés d'un bloc avec un lien (85) qui est un barreau rectiligne orthogonal à l'axe (X-X) et des extrémités opposées desquelles s'étendent ledit élément mélangeur (82) et ledit élément racleur (83) avec des parties respectives (82A, 83A) à proximité dudit capuchon (81), chacune des parties (82A, 83A) étant pourvues d'une surface (82B, 83B) concave vers et inclinée vers les extrémités libres de l'élément opposé correspondant, l'élément mélangeur (82) comprenant en outre une seconde partie (82C), plus fine que la première partie, pour une connexion entre ladite première partie (82A) et une troisième partie (82D), ladite troisième partie étant en forme de cuillère et pourvu de deux surfaces opposées s'étendant radialement, et dans laquelle ledit élément racleur (83) comprend une seconde partie (83C) s'étendant à partir de ladite première partie (83A) et ayant une forme générale de lame avec un bord vif, la seconde partie (83C) étant tournée autour d'un axe pour avoir un bord (83D) mince et rectiligne apte à racler la paroi interne dudit récipient (6) .

2. Machine (1) selon la revendications 1, dans laquelle ledit capuchon (81) comprend un fond plat et circulaire (81A) muni d'un trou central, un bord (81B) s'étendant généralement perpendiculaire à celui-ci depuis la circonférence du fond et de sorte qu'il entre en prise de manière réversible avec le bord libre dudit récipient (6).

3. Machine (1) selon la revendication 2, dans laquelle ledit trou du fond (81A) est traversé par une broche (84) s'étendant le long dudit axe (X-X), la broche (84) comprenant une tête (84A) faisant saillie à partir du fond (81A) du côté opposé par rapport au bord (81B), et une partie de connexion (84B) pour relier les éléments mélangeur (82) et racleur (83) au moyen dudit lien (85).

4. Machine (1) selon la revendication 3, dans laquelle ledit moyen de fermeture (7) de l'évaporateur (5) comprend un corps creux (71) pourvu d'un bord (72) pour fermer l'évaporateur, dans ledit corps, un arbre moteur (73) est positionné et comprend une première extrémité (73A) située en correspondance dudit bord (72) de manière à ne pas en faire saillie et à venir en prise avec la tête (84A) de ladite broche (84), ledit arbre comprenant une seconde extrémité (73B) pour une connexion avec le moteur (9).

5. Machine (1) selon l'une quelconque des revendications 1 à 4, dans laquelle ledit évaporateur (5) comprend un premier récipient (11), un second récipient (12) logé de manière fixe dans le premier récipient (11) et adapté à recevoir de manière mobile ledit récipient (6) pour un composé alimentaire, le premier récipient (11) et le second récipient (12) ayant des surfaces en regard (11A, 12A) formées pour former en coopération en elles un passage (22) pour faire circuler un fluide réfrigérant.

6. Machine (1) selon la revendication 5, dans laquelle le premier récipient (11) est muni d'un fond (14) et d'une paroi latérale (15), et dans laquelle ledit second récipient (12) est muni d'un fond (17) et d'une paroi latérale (18), ledit passage (22) s'étendant le long d'un passage hélicoïdal autour de ladite paroi latérale (18) du second récipient (12).

7. Machine (1) selon la revendication 6, dans laquelle ledit passage (22) est délimité par un filet (22A) formé sur la paroi latérale (15, 18) de l'un desdits premier et second récipients (11, 12), les anneaux desdits filets (22A) ont un sommet qui, contre la paroi latérale (15, 18) de l'autre desdits premier ou second récipients (11, 12), ferme hermétiquement.
